# FASCICULE DE BREVET EUROPEEN

(11) **EP 0 912 352 B1**
(45) Date de publication et mention de la délivrance du brevet: **09.10.2002**
(21) Numéro de dépôt: 97936637.4
(22) Date de dépôt: 11.07.1997
(51) Int. Cl.: B60B 3/04

(54) **ROUE ACOUSTIQUEMENT AMORTISSANTE**
RAD MIT SCHALLDÄMPFUNG
SOUND ABSORBING WHEEL

(30) Priorité: 15.07.1996 FR 9608917
(43) Date de publication de la demande: 06.05.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: RENARD, Etienne, F-63200 Riom (FR); PEYRONNE, Myriam, F-10000 Troyes (FR)
(74) Mandataire: Dequire, Philippe Jean-Marie Denis
(86) Numéro de dépôt international: EP9703685
(87) Numéro de publication internationale: WO98002319

(56) Documents cités:
- DE-A- 1 964 393
- DE-A- 2 457 907
- DE-A- 3 241 056
- DE-A- 3 328 135
- FR-A- 800 935
- PATENT ABSTRACTS OF JAPAN vol. 018, no. 383 (M-1640), 19 juillet 1994 & JP 06 106903 A (MAZDA MOTOR CORP), 19 avril 1994, cité dans la demande
- PATENT ABSTRACTS OF JAPAN vol. 016, no. 311 (M-1277), 8 juillet 1992 & JP 04 087803 A (MAZDA MOTOR CORP), 19 mars 1992, cité dans la demande

## Description

L'invention concerne une roue pour véhicule, et particulièrement une roue ayant des propriétés d'amortissement acoustique particulières.

Lorsqu'un véhicule se déplace sur une chaussée, son conducteur et ses passagers sont placés dans l'habitacle dans une ambiance très bruyante. Et c'est un souci constant des constructeurs automobiles que de limiter le plus possible le niveau sonore de leurs véhicules.

Les origines de ces bruits dans l'habitacle sont très variées. On peut citer les bruits dus au moteur, ou d'origine aérodynamique, ou liés aux pompes hydrauliques diverses ou les bruits de roulement des pneumatiques sur la chaussée.

Ces derniers ont pour origine les chocs subis en roulage par la bande de roulement des pneumatiques et qui sont transmis par voie solidienne à l'habitacle du véhicule. Ces bruits sont dans une gamme de fréquence très large, comprise entre 80 et 800 Hz avec notamment des pics vers 250 Hz. On appelle ces bruits le "bourdonnement de caisse".

Dans cette gamme de fréquence, on trouve en particulier un mode propre de vibration du tore d'air de la cavité interne des pneumatiques ainsi que quatre modes propres de vibration des roues usuelles.

De nombreuses recherches ont été entreprises pour essayer de limiter le bruit perçu dans l'habitacle des véhicules. A titre d'exemple, la demande de brevet JP 4-87803 propose d'introduire une paroi dans la cavité interne du pneumatique pour séparer en deux parties le tore d'air interne, modifier de façon substantielle ses modes de vibration en les déplaçant au-delà de 500 Hz et ainsi atténuer les pics du bourdonnement de caisse dans l'habitacle situés aux environ de 250 Hz.

Un autre mode d'action est décrit dans la demande JP 6-106903. Cette demande propose d'introduire dans la cavité interne du pneumatique un élément acoustiquement amortissant par exemple une mousse, pour atténuer les vibrations dues à la résonance du tore d'air.

Ces demandes n'ont encore fait l'objet à ce jour d'aucune réalisation industrielle, en conséquence, le problème d'atténuer efficacement le bruit perçu dans l'habitacle d'un véhicule est toujours posé avec insistance.

DE-A-1 964 393, considéré comme l'état de la technique le plus proche, propose de renforcer le nez de galbe du disque par l'augmentation de son épaisseur.

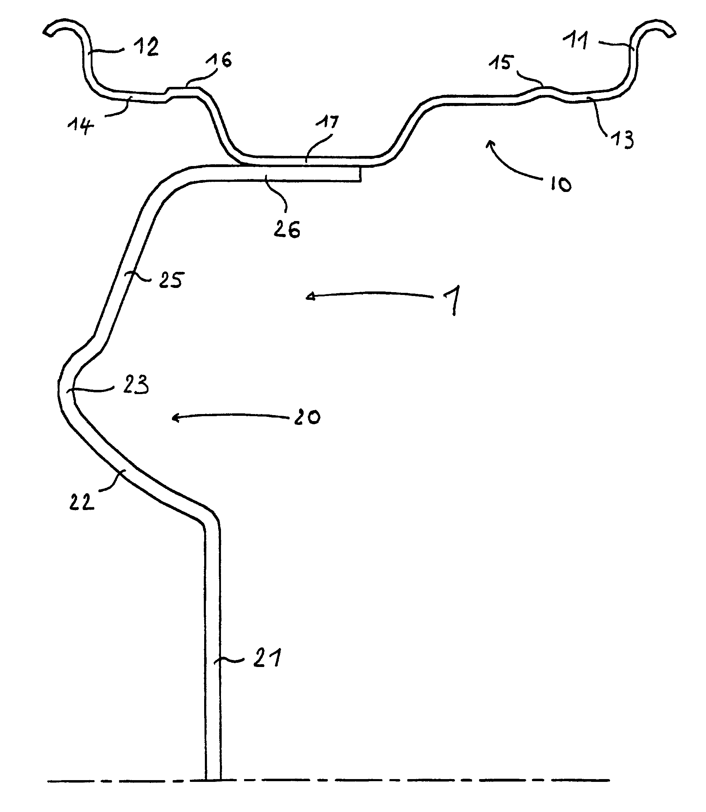

Dans ce qui suit, en définissant les orientations axiales "intérieure" et "extérieure" relativement au plan médian d'une roue, on entend par "nez de galbe" d'un disque de roue, la partie du disque située axialement le plus à l'extérieur (voir figure 1).

L'invention a pour objet un procédé pour élever les fréquences de plusieurs des modes propres de vibration d'une roue de véhicule comprenant une jante et un disque, dans lequel on renforce mécaniquement la zone circonférentielle formant le nez de galbe dudit disque.

Selon un mode de réalisation, l'épaisseur du disque au niveau de sa partie axialement la plus extérieure est supérieure de 10 à 150 % à l'épaisseur des autres parties du disque.

Selon un autre mode de réalisation, une virole continue est fixée au nez de galbe du disque. Préférentiellement, cette virole est aménagée du côté axial intérieur du disque de la roue, mais elle peut aussi être placée du côté axial extérieur.

On peut aussi fixer axialement intérieurement ou extérieurement au nez de galbe du disque un ensemble d'éléments de renfort, par exemple, une virole discontinue.

Comme il sera expliqué plus avant, une roue selon l'invention dont le disque, au niveau de son nez de galbe, est mécaniquement renforcé relativement à un profil de roue usuel mécaniquement optimisé, présente au moins deux de ses modes propres de vibration décalés vers les hautes fréquences.

Mais, cette roue présente aussi l'avantage de permettre une atténuation sensible du bourdonnement de caisse perçu au niveau de l'habitacle d'un véhicule équipé de telles roues.

Une roue selon l'invention peut aussi comporter une liaison mécanique entre le disque et la jante renforcée au-delà du strict nécessaire pour résister aux efforts de roulage pour élever les fréquences de plusieurs des modes propres de vibration de ladite roue.

L'avantage de ce mode de réalisation de l'invention est d'augmenter l'efficacité de l'amortissement du bourdonnement de caisse dans l'habitacle d'un véhicule.

Plusieurs modes de réalisation de l'invention vont maintenant être présentés, à titre non limitatif, en s'appuyant sur les figures suivantes :
- la figure 1 représente une demi-coupe d'une roue de tourisme usuelle en tôle d'acier;
- la figure 2 présente la réponse vibratoire d'une roue à une excitation par choc ;
- les figures 3 à 6 illustrent les quatre modes de vibration usuels de la roue de la figure 1, avec en (a) une roue non déformée et en (b) la même roue avec une déformation amplifiée ;
- la figure 7 présente une roue selon un second mode de réalisation de l'invention avec un renfort de nez de galbe et un renfort de liaison disque/jante ;
- la figure 8 présente les résultats de l'analyse en bandes tiers d'octave d'un test véhicule de roues selon l'invention ;
- la figure 9 présente une roue selon un second mode de réalisation de l'invention avec un renfort de nez de galbe disposé axialement intérieurement ;
- la figure 10 présente une roue selon un premier mode de réalisation de l'invention avec un renfort de nez de galbe discontinu ;
- la figure 11 présente plusieurs modes de réalisation de renforts de liaison disque/jante ; et
- la figure 12 présente un autre mode de réalisation d'un renfort de liaison disque/jante dans le cas d'un assemblage disque/jante sous siège.

A la figure 1 est représentée une roue 1 de référence "5 1/2Jx14CHA-4-36" usuelle de véhicule de tourisme en tôle d'acier. Cette roue comprend une jante 10 et un disque 20. En prenant comme référence la position du disque 20 relativement au plan médian de la roue 1, pour définir les côtés axialement extérieur et intérieur, la jante 10 présente deux crochets intérieur 11 et extérieur 12, deux sièges intérieur 13 et extérieur 14, deux bossages anti-décoincement ou "humps" intérieur 15 et extérieur 16 et un creux de jante 17.

Le disque comprend une portée moyeu 21, une cuvette de galbe 22, un nez de galbe 23, une zone d'ajours 25 et une zone d'emboîtage 26 sous le creux de jante 17 de la jante 10. Le nez de galbe 23 est la partie du disque axialement la plus extérieure.

Cette roue a un profil optimisé mécaniquement et est réalisée par emboutissage de tôles d'acier. En conséquence, les épaisseurs des différentes parties du disque 20 et de la jante 10 sont sensiblement constantes.

Lorsqu'une telle roue est excitée mécaniquement, elle peut entrer en résonance selon plusieurs modes propres de vibration. La détermination de ces modes propres se fait en fixant la roue à un massif sismique par exemple, puis en l'excitant par un choc au moyen d'un marteau dynamométrique, en enregistrant l'accélération relative à cette excitation au moyen d'accéléromètres et en calculant la fonction de transfert γ/*F* = *f*(ν) où γ est l'accélération mesurée en m/s², *F* la force du choc imposé en newton et ν la fréquence de vibration en hertz.

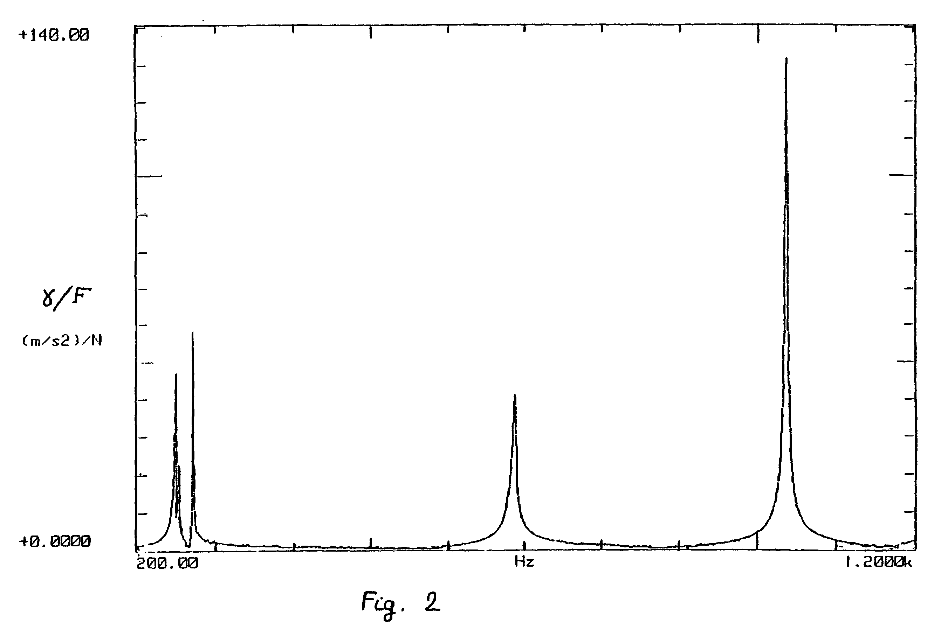

La figure 2 présente une telle courbe γ /*F = f*(ν) pour la roue de la figure 1. Sur cette courbe, on note la présence de quatre pics dans la gamme 80-800 Hz. Ces pics correspondent aux quatre modes propres de vibration usuels de la roue dans cette gamme de fréquences.

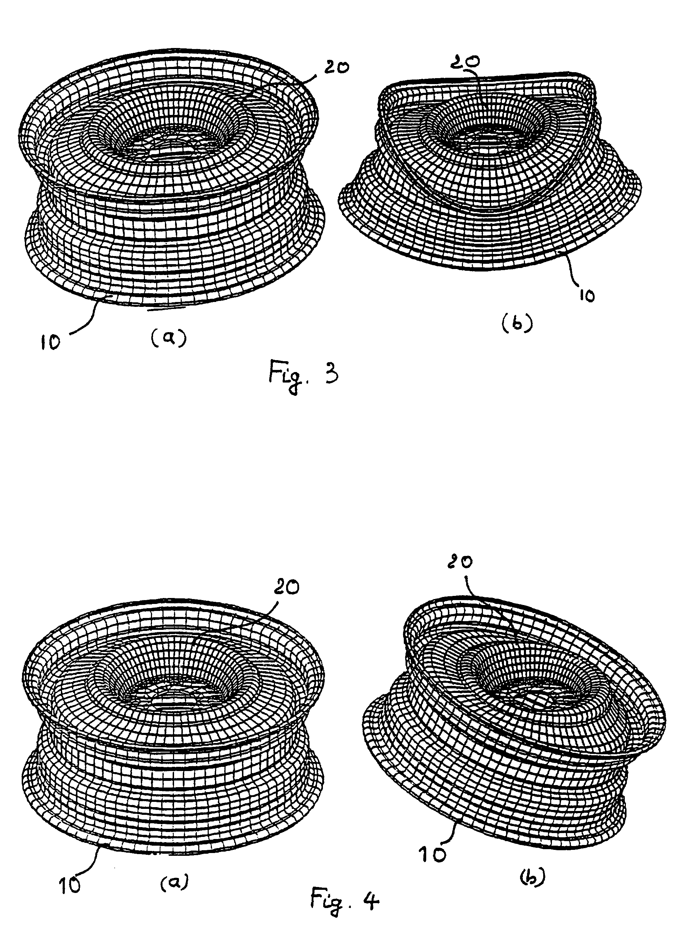

Ces modes propres de vibration sont maintenant décrits à l'aide des figures 3 à 6 issues d'une simulation numérique. Ces figures présentent en perspective : en (a) la roue non déformée et en (b) la roue avec une déformation fortement amplifiée correspondant à l'un des modes propres.

Il y a deux modes propres de disque, ainsi appelés parce que c'est principalement le disque 20 qui se déforme.

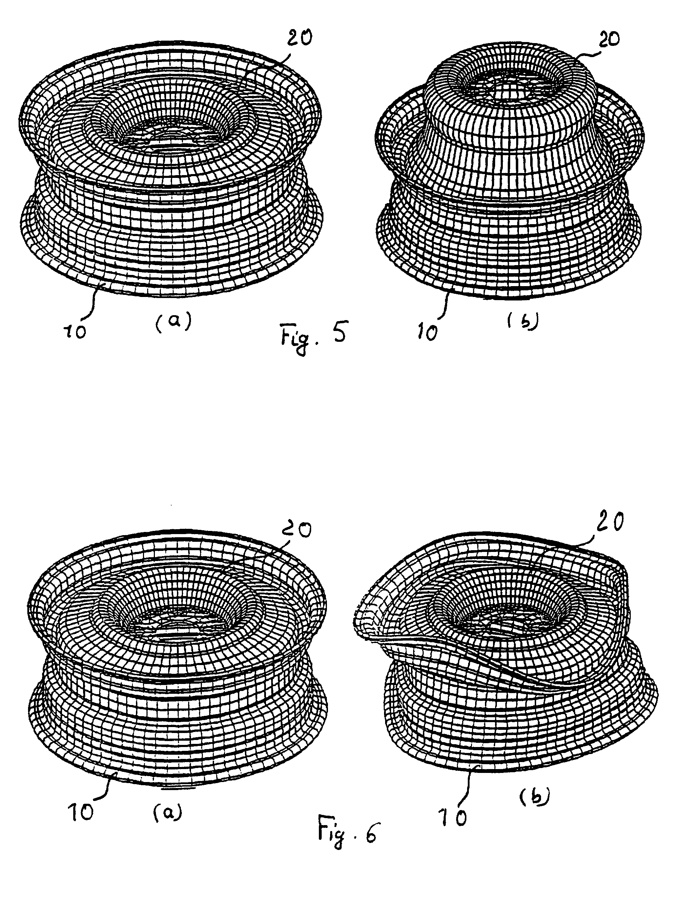

Le premier mode propre de disque appelé mode de basculement du disque, est présenté à la figure 4. Ce mode propre se situe vers 271 Hz et correspond à un basculement de l'ensemble de la jante 10 autour d'un axe compris dans le plan de portée moyeu du disque 20.

Le second mode propre de disque appelé mode de pompage (figure 5) se situe vers 513 Hz. Ce mode propre correspond à un mouvement de pompage du disque 20 qui se déforme axialement de part et d'autre de la jante 10.

Dans les deux autre modes propres, c'est principalement la jante qui se déforme. On les appelle les modes de jante.

La figure 3 présente le premier mode propre de jante dans lequel on observe une ovalisation des deux crochets de jante en opposition de phase. Ce mode propre se situe vers 250 Hz et on l'appelle mode d'ovalisation d'harmonique 2.

Le second mode propre de jante (figure 6) se situe vers 670 Hz. Il correspond à nouveau à une ovalisation des deux crochets de jante en opposition de phase mais d'ordre supérieur. On l'appelle mode d'ovalisation d'harmonique 3.

Le test d'analyse du bourdonnement de caisse sur véhicule est réalisé en plaçant un mannequin équipé de microphones dans l'habitacle d'un véhicule. Les signaux de sortie des microphones sont enregistrés et analysés en puissance acoustique, globalement et en bandes tiers d'octave. Les résultats d'un test sont présentés par la variation des puissances acoustiques de la solution testée relativement aux puissances acoustiques d'une référence.

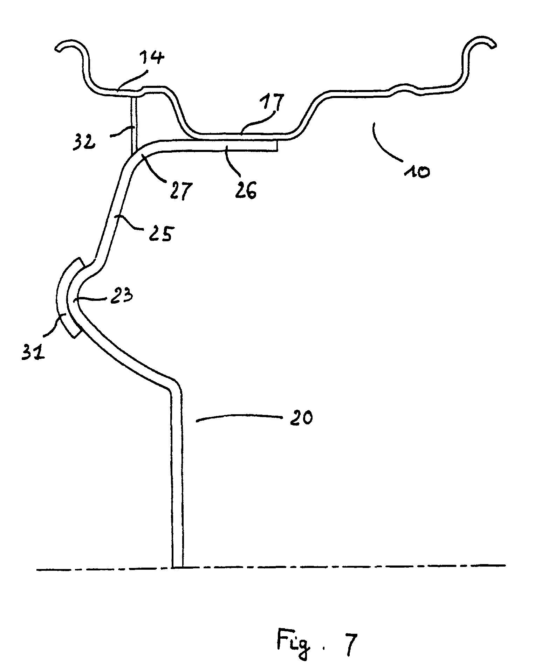

La figure 7 présente une roue 1 équipée de deux renforts selon l'invention. Le renfort 31 de nez de galbe 23 est une virole cintrée assemblée par collage et soudage sur la paroi extérieure de ce nez de galbe 23. Ce renfort 31 a une épaisseur identique à celle des autres parties du disque 20. En conséquence, l'épaisseur totale du nez de galbe 23 est ici doublée relativement à l'épaisseur normale du nez de galbe 23 de la roue 1 de la figure 1.

Le renfort 32 de liaison disque/jante est une virole droite de deux millimètres d'épaisseur soudée sous le siège extérieur 14 d'une part, et au niveau de la liaison 27 entre la zone d'emboîtage 26 sous le creux de gorge 17 et la zone d'ajours 25.

Trois roues ont été testées avec ces renforts:
(a) la roue S1 avec un renfort 31 de nez de galbe 23 ;
(b) la roue S2 avec un renfort 32 de liaison disque/jante ; et
(c) la roue S3 avec un renfort 31 de nez de galbe 23 et un renfort 32 de liaison disque/jante.

Ces roues ont été comparées à la roue 1 dénommée R présentée à la figure 1 sans renfort.

L'analyse des modes propres de vibration a donné les résultats présentés au tableau 1 ci-dessous.

**Tableau 1**

| **Roue** | **mode de basculement (Hz)** | **mode de pompage (Hz)** | **mode d'ovalisation H2 (Hz)** | **mode d'ovalisation H3 (Hz)** |
|---|---|---|---|---|
| **R** | 271 | 513 | 250 | 670 |
| **S1** | 336 | 621 | 255 | 681 |
| **S2** | 265 | 509 | 324 | 853 |
| **S3** | 334 | 651 | 320 | 770 |

Ce tableau montre que le renfort 31 de nez de galbe 23 a pour conséquence de déplacer sensiblement vers les hautes fréquences les deux modes propres de vibration du disque, les modes de basculement (+ 65 Hz) et de pompage (+ 108 Hz). En revanche, son effet sur les deux modes propres de la jante est quasiment nul (+ 5 Hz, + 11 Hz).

Les résultats de la roue S2 montrent qu'à l'inverse de la roue S1, le renfort 32 de liaison disque/jante n'a pratiquement pas d'action sur les deux modes propres de disque (- 6 Hz, - 4 Hz) mais décale sensiblement les deux modes propres de jante (+ 74 Hz, + 72 Hz).

On constate enfin que la roue S3 a logiquement l'ensemble de ses modes propres de vibration décalés vers les hautes fréquences (de 63 à 138 Hz).

Un test sur véhicule a été effectué pour déterminer si ces différentes roues modifiaient ou non l'intensité des bruits de roulement perçus dans l'habitacle d'un véhicule, le bourdonnement de caisse. Le véhicule était une Mégane de Renault équipé de quatre roues identiques correspondant à la solution testée avec des pneumatiques Michelin MXT E, vitesse de l'essai : 80 km/h.

Le tableau 2 présente les résultats de l'analyse globale des essais réalisés.

**Tableau 2**

| **Roue** | **S1** | **S2** | **S3** |
|---|---|---|---|
| *P - P*_{*R*} **dB(A)** | - 0,55 | 0,00 | - 0,65 |

avec *P* puissance acoustique moyenne de la solution testée, et *P*_{*R*} puissance acoustique moyenne de la roue de référence R.

Le tableau 2 montre un résultat remarquable pour la roue S1 qui permet une atténuation globale de 0,55 dB(A). Une telle atténuation du bourdonnement de caisse est très sensible. En revanche, la roue S2 n'a aucune efficacité globale. Enfin, le résultat de la roue S3 confirme l'efficacité du renfort de nez de galbe 31 mais indique aussi une synergie entre les deux renforts 31, 32 puisque l'atténuation globale de cette roue est de 0,65 dB(A).

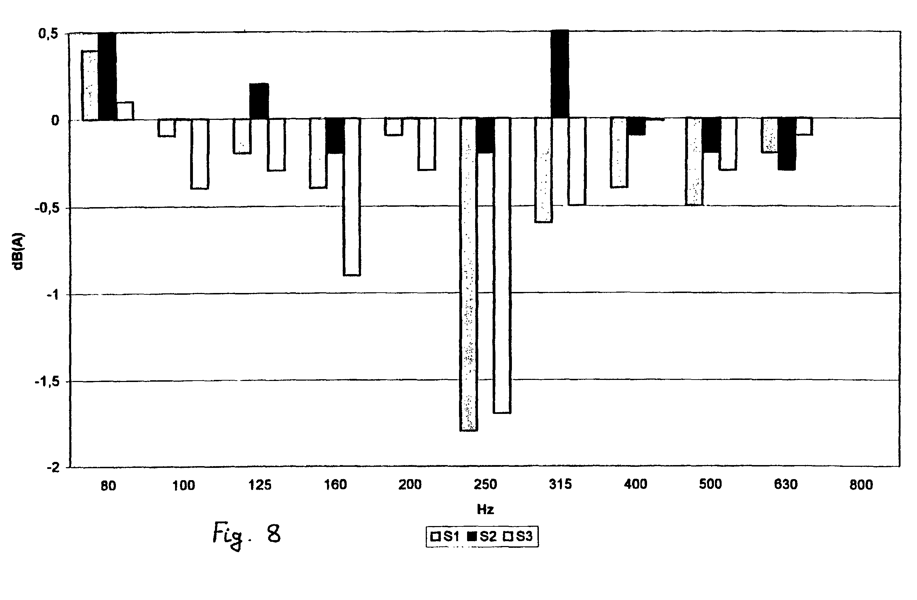

La figure 8 présente les résultats de l'analyse en bandes tiers d'octave du test sur véhicule précédent.

Le résultat le plus important de cette figure est, outre la confirmation de l'analyse globale, le fait que l'atténuation observée dépasse 1,5 dB(A) pour les deux roues S₁ et S₃ dans la bande centrale de 250 Hz, bande où se situent des pics du bourdonnement de caisse.

Ce résultat montre que les roues selon l'invention, équipées au moins d'un renfort 31 de nez de galbe 23, permettent effectivement et de façon très substantielle d'atténuer le bourdonnement de caisse perçu dans l'habitacle d'un véhicule.

Sans sortir du cadre de l'invention, de nombreux autres modes de réalisation de renforts peuvent être mis en oeuvre.

En particulier, la demanderesse a constaté que dès une augmentation de 10 % de l'épaisseur du nez de galbe 23, on obtenait une augmentation significative de la fréquence de vibration des deux modes propres de disque. En revanche, il ne semble pas intéressant de dépasser une augmentation d'épaisseur de l'ordre de 150 % en raison du poids supplémentaire que cela occasionnerait.

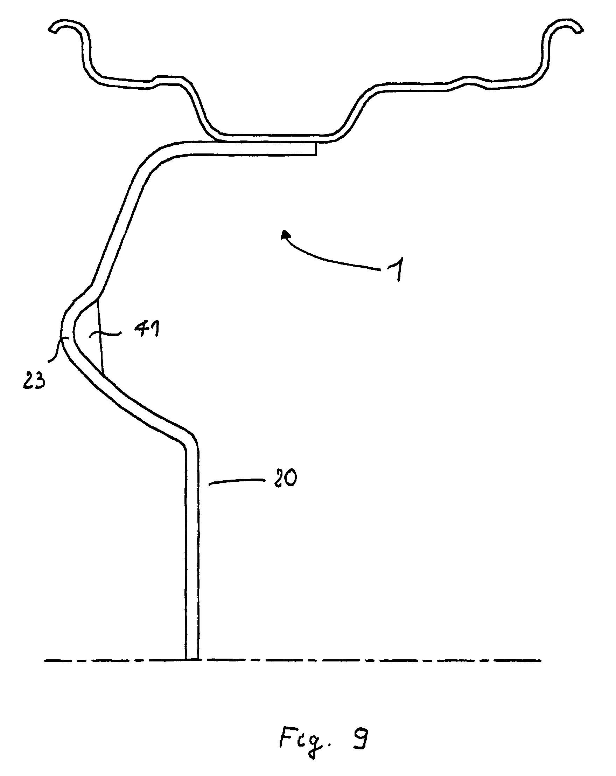

Les figures 9 à 12 présentent d'autres modes de réalisation de l'invention.

A la figure 9 est présenté une roue 1 dont le disque 20 comprend un renfort 41 de nez de galbe 23 continu disposé axialement intérieurement. Un tel disque de roue peut être obtenu en soudant un tel renfort 41 après ou pendant la réalisation par emboutissage de ce disque de roue en tôle d'acier ou d'aluminium. On peut aussi obtenir un disque équivalent par variation d'épaisseur du disque dans la zone du nez de galbe 23 par des procédés de fluotournage ou repoussage de tôles d'acier ou d'aluminium. De tels disques de roue peuvent encore appartenir à des roues réalisées par moulage ou par forgeage suivis si nécessaire d'un usinage jusqu'à l'obtention du profil désiré.

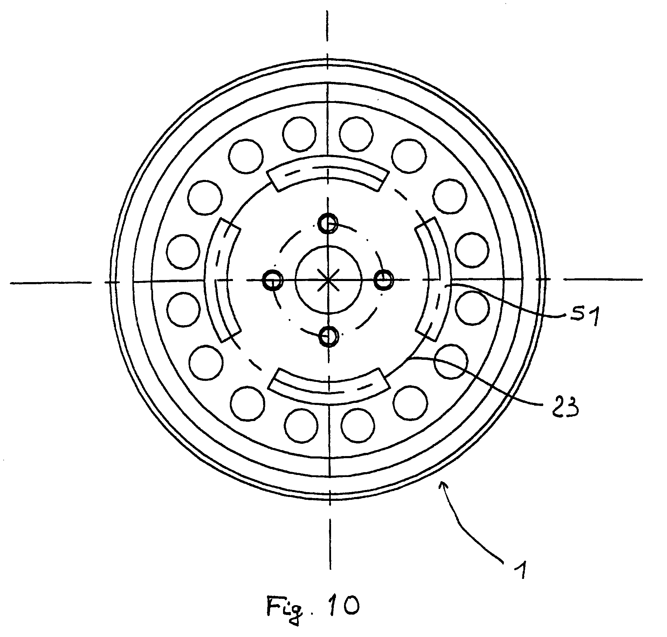

Les renforts peuvent aussi être discontinus tels ceux présentés à la figure 10. A cette figure, on voit de côté une roue tourisme 1 comportant au niveau du nez de galbe 23 quatre renforts 51 régulièrement répartis sur la circonférence.

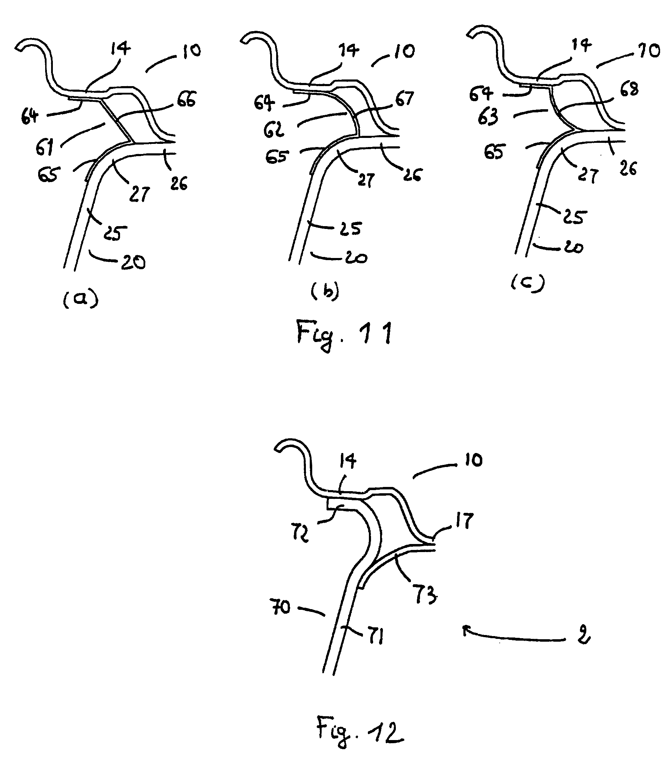

La figure 11 présente une roue 1 équipée de renforts de liaison disque/jante. A la figure 11 (a) le renfort 61 de liaison disque/jante est une virole droite 66 avec deux éléments d'appui 64 contre le siège 14 de la jante 10 et 65 contre la zone de liaison 27 entre la zone d'emboîtage 26 et la zone d'ajours 25 du disque 20. Le renfort 62 de la figure 11 (b) comporte comme précédemment une virole 67 avec deux éléments de support 64 et 65. Dans cet exemple, la virole 67 est arquée avec une concavité tournée vers l'extérieur du disque 20. Enfin le renfort 63 de la figure 11 (c) a une virole 68 arquée dont la concavité est tournée vers l'intérieur du disque 20. Ces trois renforts de liaison disque/jante décalent de façon très sensible les deux modes propres de vibration de la jante vers les hautes fréquences, mais les décalages les plus marqués sont obtenus avec le renfort 63 de la figure 11 (c) dont la concavité est tournée vers l'intérieur.

La figure 12 présente une roue 2 équipée d'un autre exemple de renfort 73 de liaison disque/jante. Dans ce cas l'assemblage du disque 70 est réalisé sous le siège extérieur 14 de la jante 10 avec une concavité de la zone d'emboîtage 72 tournée vers l'extérieur du disque 70. Le renfort 73 rejoint l'extrémité radialement extérieure de la zone d'ajours 71 du disque 70 et le creux de jante 17. Cette solution est particulièrement efficace en termes de décalage des modes propres de vibration de la jante.

## Revendications

1. Roue (1) de véhicule comprenant une jante (10) et un disque (20, 70), ladite roue présentant un ensemble de modes propres de vibration, dans laquelle la zone circonférentielle formant le nez de galbe (23) dudit disque (20, 70) est renforcée mécaniquement au-delà du strict nécessaire à la résistance mécanique aux efforts de roulage (10) pour élever les fréquences de plusieurs des modes propres de vibration de ladite roue, **caractérisée en ce que** ledit renforcement est réalisé au moyen d'un ensemble d'éléments de renfort (51) fixés, de façon discontinue, au nez de galbe (23) du disque (20, 70).

2. Roue (1) selon la revendication 1, dans laquelle les éléments de renfort sont fixés axialement intérieurement au nez de galbe.

3. Roue (1) selon la revendication 1, dans laquelle les éléments de renfort sont fixés axialement extérieurement au nez de galbe.

4. Roue (1, 2) de véhicule comprenant une jante (10) et un disque (20, 70), ladite roue présentant un ensemble de modes propres de vibration, dans laquelle la zone circonférentielle formant le nez de galbe (23) dudit disque (20, 70) est renforcée mécaniquement au-delà du strict nécessaire à la résistance mécanique aux efforts de roulage (10) pour élever les fréquences de plusieurs des modes propres de vibration de ladite roue, **caractérisée en ce que** la liaison mécanique entre ledit disque (20, 70) et ladite jante est aussi renforcée mécaniquement.

5. Roue (1, 2) selon la revendication 4, dans laquelle l'épaisseur du disque (20, 70) au niveau du nez de galbe (23) est supérieure de 10 à 150 % à l'épaisseur des autres parties du disque (20, 70).

6. Roue (1, 2) selon la revendication 4, dans laquelle une virole (31, 41) continue est fixée au nez de galbe (23) du disque (20).

7. Roue (1, 2) selon la revendication 6, dans laquelle ladite virole (31, 41) est aménagée du côté axial intérieur ou extérieur du disque (20) de la roue.

8. Roue (1, 2) selon la revendication 4, dans laquelle un ensemble d'éléments de renfort (51) est fixé axialement intérieurement ou extérieurement au nez de galbe (23) du disque (20, 70).

9. Roue (1) selon l'une des revendications 4 à 8, comportant une zone d'emboîtage (26) du disque (20) au niveau du creux de jante (17) de la jante (10), dans laquelle un renfort mécanique (32, 61, 62, 63) est disposé entre le siège extérieur (14) de la jante (10) et la zone de liaison (27) entre la zone d'ajours (25) et la zone d'emboîtage (26) dudit disque (20).

10. Roue (1) selon la revendication 9, dans laquelle ledit renfort mécanique comporte une virole (62, 63) de forme arquée entre ledit siège de jante 14 et ledit disque 20.

11. Roue (1) selon la revendication 10, dans laquelle ladite virole (63) a une concavité tournée vers l'intérieur du disque (20).

12. Roue (2) selon l'une des revendications 4 à 8, comportant une zone d'emboîtage (72) du disque (70) au niveau du siège extérieur (14) de la jante (10), dans laquelle une virole (73) est disposée entre le creux de jante (17) et l'extrémité radialement extérieure de la zone d'ajours (71) dudit disque (70).

13. Roue (1, 2) selon l'une des revendications 1 à 12, dans laquelle le disque (20, 70) est réalisé à partir d'une tôle d'acier ou d'aluminium.

14. Roue (1, 2) selon la revendication 13, dans laquelle le disque (20, 70) est réalisé par emboutissage ou fluotournage.

## Patentansprüche

1. Fahrzeugrad (1) mit einer Felge (10) und einer Scheibe (20, 70), wobei das genannte Rad eine Gruppe von eigentümlichen Schwingungsweisen aufweist, in dem die Umfangszone, die die Nase der Wölbung (23) der genannten Scheibe (20, 70) bildet, mechanisch über das Maß, das streng notwendig ist für die mechanische Beständigkeit gegenüber den Abrollkräften (10), verstärkt ist, um die Frequenzen mehrerer eigentümlicher Schwingungsweisen des genannten Rades anzuheben, **dadurch gekennzeichnet, daß** die genannte Verstärkung (51) mittels einer Gruppe von nicht-durchgehend an der Nase der Wölbung (23) der Scheibe (20, 70) befestigten Verstärkungselementen gebildet ist.

2. Rad (1) nach Anspruch 1, worin die Verstärkungselemente axial innerhalb der Nase der Wölbung befestigt sind.

3. Rad (1) nach Anspruch 1, worin die Verstärkungselemente axial außerhalb der Nase der Wölbung befestigt sind.

4. Fahrzeugrad (1, 2) mit einer Felge (10) und einer Scheibe (20, 70), wobei das genannte Rad eine Gruppe von eigentümlichen Schwingungsweisen aufweist, in dem die Umfangszone, die die Nase der Wölbung (23) der genannten Scheibe (20, 70) bildet, mechanisch über das Maß, das streng notwendig ist für die mechanische Beständigkeit gegenüber den Abrollkräften (10), verstärkt ist, um die Frequenzen mehrerer eigentümlicher Schwingungsweisen des genannten Rades anzuheben, **dadurch gekennzeichnet, daß** die mechanische Verbindung zwischen der genannten Scheibe (20, 70) und der genannten Felge ebenfalls mechanisch verstärkt ist.

5. Rad (1, 2) nach Anspruch 4, worin die Dicke der Scheibe (20, 70) auf Höhe der Nase der Wölbung (23) um 10 bis 150% größer ist als die Dicke anderer Teile der Scheibe (20, 70).

6. Rad (1, 2) nach Anspruch 4, worm ein durchgehender Ring (31, 41) an der Nase der Wölbung (23) der Scheibe (20) befestigt ist.

7. Rad (1, 2) nach Anspruch 6, worin der genannte Ring (31, 41) auf der axialen, inneren oder äußeren Seite der Scheibe (20) des Rades angeordnet ist.

8. Rad (1, 2) nach Anspruch 4, worin eine Gruppe von Verstärkungselementen (51) axial innen oder außen an der Nase der Wölbung (23) der Scheibe (20, 70) befestigt ist.

9. Rad (1) nach einem der Ansprüche 4 bis 8, mit einer Einschubzone (26) der Scheibe (20) auf Höhe der Felgenhöhlung (17) der Felge (10), worin eine mechanische Verstärkung (32, 61, 62, 63) zwischen dem äußeren Sitz (14) der Felge (10) und der Verbindungszone (27) zwischen der Durchbruchzone (25) und der Einschubzone (26) der genannten Scheibe (20) angeordnet ist.

10. Rad (1) nach Anspruch 9, worin die genannte mechanische Verstärkung einen bogenförmigen Ring (62, 63) zwischen dem genannten Felgensitz 14 und der genannten Scheibe 20 aufweist.

11. Rad (1) nach Anspruch 10, worin der genannte Ring (63) eine dem Inneren der Scheibe (20) zugewandte Höhlung aufweist.

12. Rad (2) nach einem der Ansprüche 4 bis 8, mit einer Einschubzone (72) der Scheibe (70) auf Höhe des äußeren Sitzes (14) der Felge (10), worin der Ring (73) zwischen der Felgenhöhlung (17) und dem radial äußeren Ende der Durchbruchzone (71) der genannten Scheibe (70) angeordnet ist.

13. Rad (1, 2) nach einem der Ansprüche 1 bis 12, worin die Scheibe (20, 70) aus einem Stahl- oder Aluminiumblech hergestellt ist.

14. Rad (1, 2) nach Anspruch 13, worin die Scheibe (20, 70) durch Tiefziehen oder durch Rolldrücken hergestellt ist.

## Claims

1. Vehicle wheel (1) comprising a rim (10) and a disc (20, 70), said wheel having a set of natural modes of vibration, in which the circumferential zone forming the curved nose (23) of said disc (20, 70) is mechanically reinforced beyond what is strictly necessary for mechanical resistance to rolling stresses (10) in order to raise the frequencies of several of the natural modes of vibration of said wheel, **characterised in that** said reinforcement is effected by means of a set of reinforcing elements (51) fastened, discontinuously, to the curved nose (23) of the disc (20, 70).

2. Wheel (1) according to Claim 1, in which the reinforcing elements are axially fastened internally to the curved nose.

3. Wheel (1) according to Claim 1, in which the reinforcing elements are axially fastened externally to the curved nose.

4. Vehicle wheel (1, 2) comprising a rim (10) and a disc (20, 70), said wheel presenting a set of natural modes of vibration, in which the circumferential zone forming the curved nose (23) of said disc (20, 70) is mechanically reinforced beyond what is strictly necessary for mechanical resistance to rolling stresses (10) in order to raise the frequencies of several of the natural modes of vibration of said wheel, **characterised in that** the mechanical link between said disc (20, 70) and said rim is also mechanically reinforced.

5. Wheel (1, 2) according to Claim 4, in which the thickness of the disc (20, 70) at the curved nose (23) is 10 to 150% greater than the thickness of the other parts of the disc (20, 70).

6. Wheel (1, 2) according to Claim 4, in which a continuous ring (31, 41) is fastened to the curved nose (23) of the disc (20).

7. Wheel (1, 2) according to Claim 6, in which said ring (31, 41) is arranged on the inner or outer axial side of the wheel disc (20).

8. Wheel (1, 2) according to Claim 4, in which a set of reinforcing elements (51) is axially fastened internally or externally to the curved nose (23) of the disc (20, 70).

9. Wheel (1) according to one of Claims 4 to 8, comprising a zone of jointing (26) of the disc (20) at the cavity (17) of the rim (10), in which a mechanical reinforcement (32, 61, 62, 63) is arranged between the outer seat (14) of the rim (10) and the zone of connection (27) between the perforated zone (25) and the jointing zone (26) of said disc (20).

10. Wheel (1) according to Claim 9, in which said mechanical reinforcement comprises an arched ring (62, 63) between said rim seat 14 and said disc 20.

11. Wheel (1) according to Claim 10, in which said ring (63) has a concavity turned toward the inside of the disc (20).

12. Wheel (2) according to one of Claims 4 to 8, containing a zone of jointing (72) of the disc (70) at the outer seat (14) of the rim (10), in which a ring (73) is arranged between the rim cavity (17) and the radially outer end of the perforated zone (71) of said disc (70).

13. Wheel (1, 2) according to one of Claims 1 to 12, in which the disc (20, 70) is made from a steel or aluminium sheet.

14. Wheel (1, 2) according to Claim 13, in which the disc (20, 70) is made by stamping or flow spinning.
